# EUROPEAN PATENT APPLICATION

(11) **EP 1 443 247 A1**
(43) Date of publication of application: **04.08.2004**
(21) Application number: 04000714.8
(22) Date of filing: 15.01.2004
(51) Int. Cl.: F16H 55/24

(54) **Linear actuator comprising a worm gear**

(30) Priority: 29.01.2003 IT PC20030002
(71) Applicant: Scaravella, Carlo, 29100 Piacenza (IT)
(72) Inventor: Scaravella, Carlo, 29100 Piacenza (IT)
(74) Representative: La Ciura, Salvatore

(57) **Abstract**

This invention offers a rapid-movement linear actuator of the type comprising a cogwheel (3) connected to motor means which engage a corresponding sliding toothed rod (1), wherein said rod (1) is cylindrical and has toothing constituted by a helical thread (2), and said cogwheel (3) has a curved profile so as to adapt to the shape of the rod (1).

The actuator according to the invention is much cheaper to make than known rack-and-pinion actuators, and presents the advantage of quieter operation, the possibilty of eliminating play due to wear, and the possibility of manufacturing actuators in which the rod is up to several metres long, again with limited costs.

## Description

This invention offers a rapid-movement linear actuator of the type comprising a cogwheel connected to motor means which engage a corresponding sliding toothed rod, wherein said rod is cylindrical and has toothing constituted by a helical thread, and said cogwheel has a curved profile so as to adapt to the shape of the rod.

The actuator according to the invention is much cheaper to make than known rack-and-pinion actuators, and presents the advantage of quieter operation, the possibility of eliminating play due to wear, and the possibility of manufacturing actuators in which the rod is up to several metres long, again with limited costs.

The invention relates to the sector of precision mechanics, and in particular the sector of linear actuators used, by way of example but not of limitation, to control the movements of parts of machines such as a lathe carriage, the movement of workpieces on machine tools and the movement of slides or support surfaces, and in general in all cases in which a workpiece or part of a machine needs to be moved rapidly with a linear movement.

Numerous types of linear actuators are known, ranging from the simplest, constituted by the classic rack-and-pinion actuator, to the most sophisticated, such as the recirculating ball screw type.

Rack-and-pinion actuators are constituted by a rod with toothing on one side which is engaged by the corresponding toothing of a wheel generally driven by an electric motor.

The rotation of the wheel controls the slide along the rod, in one direction or the other, of (for example) a carriage on which the wheel is mounted, or controls the movement of the rod along guides.

Racks usually have straight teeth, with the lateral teeth inclined; this involves the drawback of considerable noise, unless precision toothing is used, but such toothing would excessively increase the cost of these accessories, which are generally used for inexpensive applications.

Again in order to reduce costs, racks are made in limited lengths, with the result that when an actuator of considerable length is required a number of toothed rods have to be joined, with all the difficulties involved.

The recirculating ball screw type of actuator is quieter and more precise, but also much slower, so although they cost more than the rack-and-pinion type, they are unsuitable to control the fast movements of a workpiece.

This invention now offers a rapid-movement linear actuator of the type comprising a toothed wheel which engages a rod, also with surface toothing, but wherein the rod is cylindrical and the toothing consists of a simple helical thread engaged by the corresponding toothing of the wheel, which also has a curved profile, so as to adapt to the shape of the rod and provide a larger contact area between the teeth and quieter operation.

A rod of this kind can be manufactured simply by threading a cylindrical bar; it can therefore be made rapidly and cheaply even in long lengths, using common machine tools for threading and/or rolling.

These and other characteristics will appear more clearly from the detailed description set out below, provided by way of example but not of limitation, by reference to the annexed figures wherein:

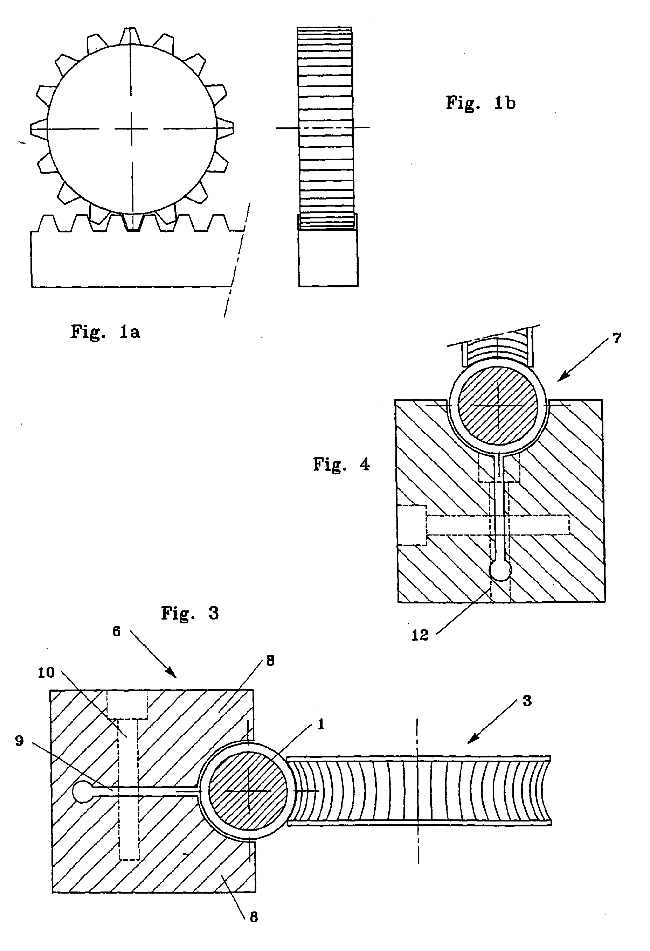

- figures 1a and 1b illustrate the side view and front view respectively of a rack-and-pinion actuator manufactured according to the known technique;
- figures 2a and 2b are the corresponding views of a linear actuator according to the invention;
- figure 3 and figure 4 illustrate two possible methods of assembling the actuator according to the invention, shown in cross-section along a plane perpendicular to the rod axis.

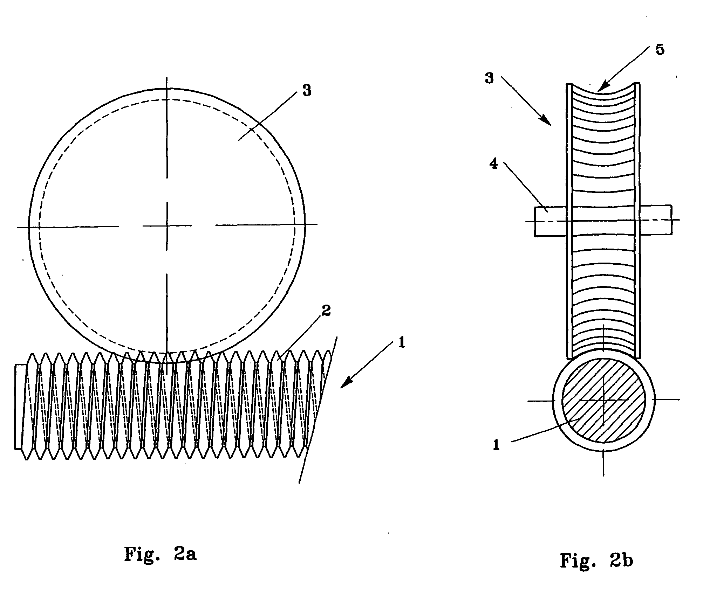

As shown in figure 2, the actuator according to the invention is substantially constituted by a rod 1, with a helical thread 2 on the surface, which is engaged by the corresponding toothing of a drive wheel 3, which is fitted to a fixed shaft 4 and caused to rotate by a motor not illustrated in the figure.

Rod 1 is made simply by threading a cylindrical bar of suitable material, such as brass or steel, and profile 5 of wheel 3 will be curved, with a curvature radius substantially equal to the radius of bar 1.

In this way the teeth of wheel 3 and bar 1 will engage along the entire toothing length of wheel 3, and consequently over a fairly large area, a number of teeth being engaged simultaneously.

Rod 1 can be mounted on guides of the type indicated by numbers 6 and 7, shown in figures 3 and 4 respectively.

Guide 6 can be constituted by a support such as a metal block shaped to form a clamp, fitted with a pair of arms 8 whose shape follows the profile of bar 1 and which surround more than half the length of the perimeter of the bar, such as approximately two-thirds or three-quarters of the perimeter, so as to retain the bar in its seating.

In the centre there is a notch 9 which allows the arms to be tightened, for example with an Allen screw 10 or the like, so as to bring the inner surface of arms 8 into contact with the outer surface of bar 1, or to clamp the former onto the latter.

In the first case, bar 1 can slide in the guides constituted by these supports 6, and the ends of the bar can be fitted with stop means constituted, for example, by clamp elements similar to supports 6, but with a thread corresponding to that of the bar on the inner surface of the arms so that they can be secured tightly around the bar.

In the case of applications in which the bar is fixed and the carriage with the wheel runs along it, supports 6 will be fully tightened to secure the bar.

Again in the case of embodiments wherein the carriage slides along a fixed bar, said bar can be secured on one side with a nut which enables it to be placed under traction, so as to adjust the pitch micrometrically by exploiting the elasticity of the material.

Figure 4 shows another actuator according to the invention, wherein the base of support 7 contains a seating for a screw 12 which enables it to be attached to the structure of a machine, for example.

As mentioned, the actuator according to the invention offers numerous advantages.

Firstly, as the toothing is helical, is it is much quieter than conventional rack-and-pinion actuators, despite its considerably lower cost. Secondly, the possibility of making the rods by threading a cylindrical bar means that rods up to several metres long can be manufactured, without any increase in costs.

Finally, by mounting the motor on a support subject to the action of Belleville washers or the like, for example, the play caused by wear can be eliminated, with the result that its operation is always quiet and precise.

An expert in the field could devise various modifications and variations, all of which should be deemed to fall within the ambit of this invention.

## Claims

1. Linear actuator of the type comprising a toothed drive wheel moved by motor means which engage a corresponding sliding toothed rod, **characterised in that** said rod is cylindrical and threaded, and that its thread is engaged by corresponding toothing on the surface of said drive wheel.

2. Linear actuator as claimed in claim 1, **characterised in that** said thread is helical.

3. Linear actuator as claimed in claim 1 or 2, **characterised in that** said drive wheel has a curved profile, corresponding to the profile of said rod.

4. Linear actuator as claimed in each of the preceding claims, **characterised in that** the rod is mounted on clamp supports with arms which have a profile with the same curvature as the rod and only partly surround it, which said arms are fitted with means designed to tighten them so as to bring them into contact with the surface of said rod.

5. Linear actuator as claimed in each of the preceding claims, **characterised in that** the rod is secured on one side with a tensioning nut to allow micrometric pitch regulation.
